# EUROPEAN PATENT APPLICATION

(11) **EP 1 646 181 A1**
(43) Date of publication of application: **12.04.2006**
(21) Application number: 04762065.3
(22) Date of filing: 11.08.2004
(51) Int. Cl.: H04L 12/00

(54) **A MEDIA GATEWAY SYSTEM**

(30) Priority: 08.12.2003 CN 200310118240
(71) Applicant: Huwaei Technology Co., Ltd., Longgang District Shenzhen Guangdong 518129 (CN)
(72) Inventor: QIAN, Xiangjiang Huawei Administration Building, Shenzhen,Guangdong 518129 (CN); REN, Jianjun Huawei Administration Building, Shenzhen,Guangdong 518129 (CN); ZHAO, Bo Huawei Administration Building, Shenzhen,Guangdong 518129 (CN)
(74) Representative: Manitz, Finsterwald & Partner GbR
(86) International application number: PCT/CN2004/000929
(87) International publication number: WO 2005/057850

(57) **Abstract**

The present invention discloses a media gateway system, comprising one central MGW and one or more than one remote MGW. The central MGW comprises: a central gateway control module, which is used to control media stream conversion and service switching; a central internal protocol conversion module, which is used to convert the MGW control protocol sent by the central gateway control module into the TDM network format used by central TDM interface module; a central TDM interface module, which is used to provide an interface between the central MGW and a TDM network; a central IP interface module, which is used to provide an interface between the central MGW and an IP network; and a central media conversion module, which is used to implement format conversion of media stream between the TDM interface module and IP interface module. The remote MGW comprises: a remote TDM switching module, which is used to perform voice circuits and service data switching between subscribers under the remote MGW; a remote TDM interface module, which is used to provide an interface between the remote MGW and the TDM network; and a remote internal protocol conversion module, whose function is the same as the central internal protocol conversion module. The present invention can realize local load reduction and centralized management maintenance, thereby lowering the transmission cost and management cost.

## Description

### Field of the Technology

The present invention relates to the Next Generation Network (NGN), more particularly, to a media gateway (MGW).

### Background of the Invention

NGN is an integrated network architecture that can provide various services like voice, data, video and multimedia services. NGN adopts a packet switched data network, i.e. IP network, as the core network, which inter-works with other networks through Media Gateways (MGW). MGW is an interface for other networks to access IP network and takes charge of the conversion of protocols and the conversion of media stream like data traffic between core IP network and access network. Media Gateway Controller (MGC) provides control functions like call establishment and switching. MGW receives the media gateway control protocol transmitted by MGC and implements media stream conversion between IP network and other networks, say, Time Division Multiplex (TDM) network.

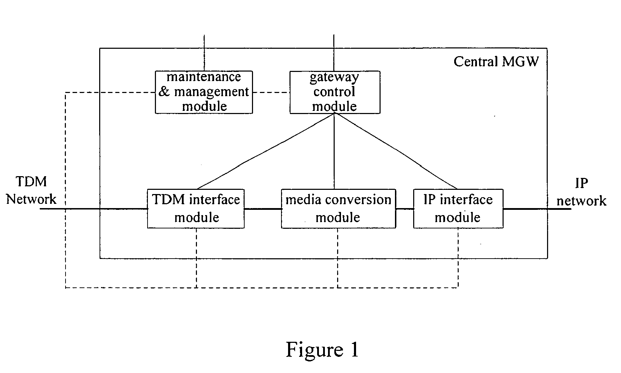

As shown in figure 1, at present, MGW comprises TDM interface module, IP interface module, media conversion module, gateway control module and maintenance & management module. TDM interface module provides an interface between MGW and a TDM network like Public Switching Telephone Network (PSTN). IP interface module provides an interface between MGW and an IP network. Media conversion module is used to implement format conversion of media stream between TDM bearer and IP bearer. Gateway control module receives and processes the media gateway control protocol transmitted by MGC, and controls TDM interface module, media conversion module as well as IP interface module to implement format conversion of media stream. And the maintenance & management module is for use in managing and maintaining each of the above-mentioned modules.

At present, MGW is set inside the core IP network of NGN, and devices at remote sites confront geological problems to access IP network through MGW due to the constrains of subscriber lines. One solution at present is to set up MGW devices at each remote site, but since each MGW is an independent network cell, MGW at each remote site has to be maintained and managed separately, which leads to pretty high cost for maintenance and management.

Another solution is to converge subscribers covered by remote sites using access network equipment or remote subscriber frame, and transmit all the service data via the existing transmission network to the MGW of the core network for processing. The MGW will implement the switching of all voice circuits and multimedia data. However, as the voice circuits and service data among local subscribers under a remote site also have to be transmitted from the remote site to the central MGW for processing as well, there is a heavy load on the network segment from the MGW to the remote site which leads to a high transmission cost.

### Summary of the Invention

The present invention provides a MGW system, which can realize not only load reduction at remote sites but also centralized management. The MGW system presents a solution to the connection between remote sites and the core network while lowering the management and transmission cost.

The Media Gateway (MGW) system of the present invention comprises a central MGW and one or more than one remote MGW.

The central MGW comprises a central gateway control module, a central internal protocol conversion module, a central media conversion module, a central Time Division Multiplex (TDM) interface module and a central IP interface module. The central gateway control module, connected with the central TDM interface module, the central media conversion module and the central IP interface module, is used for controlling the central TDM interface module, the central media conversion module and the central IP interface module, as well as for controlling the remote TDM interface module and the remote TDM switching module of the remote MGW; the central internal protocol conversion module, connected with the central gateway control module and the central TDM interface module, is used for converting the MGW control protocol transmitted to the remote MGW by the central gateway control module into a format recognizable by the central TDM interface module and transmitting the converted protocol to the remote MGW through the central TDM interface module and a TDM transmission network; the central media conversion module, connected with the central TDM interface module and the central IP interface module, is used for implementing the format conversion of media stream between the TDM interface module and the IP interface module; the central TDM interface module is used for providing an interface between the central MGW and the TDM network; the central IP interface module is used for providing an interface between the central MGW and an external IP network.

Each remote MGW comprises a remote TDM interface module, a remote TDM switching module and a remote internal protocol conversion module. The remote TDM interface module is used for providing an interface between the remote MGW and the TDM network; the remote TDM switching module, connected with the remote TDM interface module, is used for processing the voice circuits and service data between subscribers under the remote MGW received by the remote TDM interface module; the remote internal protocol conversion module, connected with the remote TDM interface module, is used for receiving the MGW control protocol through the remote TDM interface module, wherein the MGW control protocol is sent by the central MGW , transmitted via the TDM network and used for controlling the remote TDM interface module and the remote TDM switching module which are also connected with the remote internal protocol conversion module.

The central MGW further comprises a central maintenance & management module, used for establishing connections with each said module of the central MGW and the remote MGW for maintenance and management.

The remote MGW further comprises a remote maintenance & management agent module, used for establishing connections with each said module of the remote MGW for maintenance and management.

The remote MGW further comprises a remote gateway control agent module, connected with the remote TDM interface module and the remote TDM switching module to control the remote TDM interface module and the remote TDM switching module as well as connected with the remote internal protocol conversion module to receive the control protocol sent by the central MGW.

The central TDM interface module or the remote TDM interface module comprises a trunk interface or a subscriber interface.

The subscriber interface further comprises Plain Old Telephone Service (POTS) interface, Integrated Services Digital Network (ISDN) interface or Asymmetrical Digital Subscriber Line (ADSL) interface.

The control protocol comprises network management protocol, gateway control protocol or signaling.

It can be seen from the foregoing technical scheme that, the MGW provided by the present invention comprises central MGW and remote MGW, wherein the central MGW and remote MGW are connected through the existing transmission network, and the central MGW implements centralized maintenance and management of all the connected remote MGWs instead of each remote MGW implementing separate maintenance and management, respectively. As a result, the network maintenance and management cost is reduced. Meanwhile, since the remote MGW itself is capable of switching service data, the voice circuits and service data between local subscribers within the site where the remote MGW is located do not have to be converged and sent to the central MGW for switching, thus reducing the load locally, saving transmission resources and lowering transmission cost.

### Brief Description of the Drawings

Figure 1 is a schematic diagram illustrating an MGW in the prior art.
Figure 2 is a schematic diagram illustrating the MGW system in accordance with the present invention;
Figure 3 is a schematic diagram illustrating an MGW system with remote agent modules in accordance with the present invention.

### Detailed Description of the Invention

The present invention will be described in detail hereinafter with reference to the accompanying drawings.

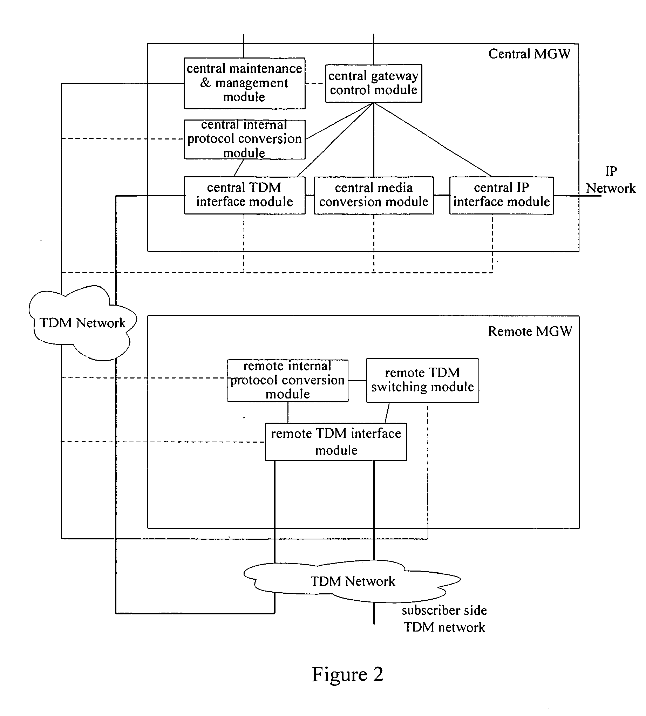

The MGW system of the present invention comprises two parts, namely a central MGW and one or more than one remote MGW. The central MGW controls each remote MGW for service data switching and performs centralized maintenance and management of remote MGW; the remote MGW mainly takes charges of service data switching between local subscribers at the remote site where the remote MGW is located so as to realize local load reduction. In the following, the MGW system will be described in detail with reference to figure 2.

As shown in figure 2, the central MGW comprises a central maintenance & management module, a central gateway control module, a central internal protocol conversion module, a central TDM interface module, a central IP interface module and a central media conversion module.

The central maintenance & management module is used to manage and maintain all modules of each remote MGW as well as to perform the existing functions in the prior art. The dotted line in figure 2 denotes that the central maintenance & management module can be connected to the modules logically so as to realize management and maintenance. The central internal protocol conversion module is used to convert the format of MGW control protocol, such as network management protocol and gateway control protocol, into the TDM-network format so that management maintenance protocol of central maintenance & management module of central MGW can be transmitted by TDM bearer to each module of remote MGW. Besides the existing functions in prior art, the central gateway control module also assumes the function of controlling the remote TDM interface module and remote TDM switching module of each remote MGW. The protocol of central gateway control module, such as signaling, is also carried by TDM network after being processed by the central internal protocol conversion module and transferred to each remote MGW through central TDM interface module. Functions of the central TDM interface module, central IP interface module and central media conversion module perform the same function as that of the corresponding modules in the prior art, respectively.

The remote MGW comprises a remote TDM interface module, a remote TDM switching module and a remote internal protocol conversion module.

The remote TDM interface module provides an interface between the remote MGW and a PSTN network or other TDM networks. The remote TDM switching module is mainly used to implement switching of voice circuits and service data between local subscribers under the site where the remote MGW is located. The remote TDM interface module and remote TDM switching module are controlled by the central gateway control module of central MGW to implement traffic switching, and are maintained and managed by the central maintenance & management module of central MGW. The function of the remote internal protocol conversion module is the same as that of the central internal protocol conversion module of central MGW, i.e. converting the control protocol of remote MGW and then loading the conversed control protocol on the TDM transmission network so as to implement control protocol interaction with the central MGW.

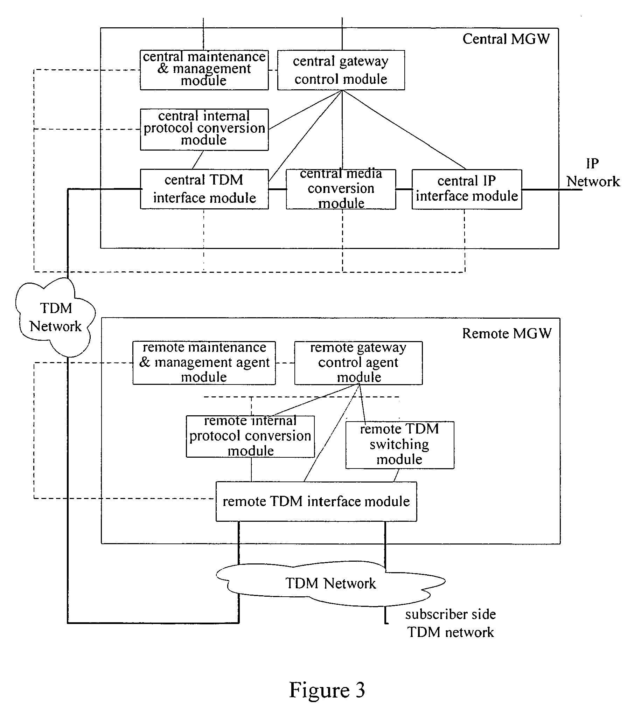

In addition, as shown in figure 3, the remote MGW may further comprise a remote maintenance & management agent module and a remote gateway control agent module to manage and control the remote MGW. When there are the maintenance & management agent module and gateway control agent module, maintenance, management and gateway control of the remote MGW, which was previously conducted by the corresponding central module, can be implemented by these two modules respectively, and these two modules are respectively controlled by the central maintenance & management module and central gateway control module of central MGW. After a connection between the central MGW and remote MGW is established, central maintenance & management module and central gateway control module control the remote maintenance & management agent module and remote gateway control agent module respectively. The dotted line denotes that the maintenance & management agent module can establish logical connections with these modules for maintenance and management.

The TDM interface module of central MGW and TDM interface module of each remote MGW all access the transmission network through standard transmission network interfaces, and the central MGW and all remote MGWs are connected by existing transmission network to establish connections between the central MGW and each remote MGW. Therefore, the central MGW and remote MGWs can be located in different geographical locations.

The remote TDM interface module provides various interfaces for the subscriber, such as the broad/narrow band subscriber interfaces like POTS interface, ISDN interface and ADSL interface, as well as trunk interface at the PSTN side, e.g. trunk circuit interface using common channel signaling or channel associated signaling, so that the subscriber can select a required interface according to application situation. When service data switching is needed between local subscribers under a remote site, the remote TDM switching module of the remote MGW, under the control of central gateway control module of the central MGW, implements the voice circuit switching or service data switching between local subscribers under the site where the remote MGW is located.

With reference to figure 2, the procedure will be described in detail by an example of calling between two local subscribers under a remote MGW site. When a subscriber under a remote MGW site initiates a local call, signaling interaction is performed first through the channel established between the remote MGW and the central MGW, namely the channel through the remote TDM interface module, the TDM transmission network, the central TDM interface module, the central internal protocol conversion module and the central gateway control module in turn. The central MGW and the remote MGW control the remote TDM switching module by transferring signaling so that the remote TDM switching module makes switching for this subscriber and sets up the connection of service channel between local subscribers. Service data transmission between local subscribers is implemented through this connection established by the remote MGW, and the voice circuit and service data between local subscribers do not need to be converged to the central MGW. The connection between the subscriber side of the remote TDM interface module and the TDM transmission network side is a connection established under the control of the remote TDM switching module.

When voice circuits or service data needs to be transferred between subscribers under different remote MGW sites, after a connection is established by signaling, service data are transferred between the remote MGW and the central MGW, i.e. the service data are transferred to the central MGW by the remote MGW via the TDM transmission network, converted into IP data under the control of the central MGW and transmitted to IP network for subsequent IP network-based transmission.

With reference to figure 2, the procedure will be described by an example of a call initiated by a subscriber under a remote MGW site with data transferred to IP network. When a subscriber under a remote MGW initiates a call toward a subscriber under another remote MGW, the remote MGW of the originating subscriber transmits signaling to the central MGW through a channel established between the remote MGW and central MGW, namely the channel through the remote TDM interface module, TDM transmission network, central TDM interface module, central internal protocol conversion module and central gateway control module in turn, and establishes a service channel under the control of the central gateway control module, e.g. a connection through the central IP interface module, central media conversion module, central TDM interface module, TDM transmission network and remote TDM interface module in turn. Through this service channel from the TDM network where the subscriber is located to IP core network, the service data of the subscriber is transmitted to IP core network for subsequent service data transmission. The connection between the subscriber side of remote TDM interface module and the TDM transmission network side is a connection established under the control of the remote TDM switching module.

While the invention has been shown and described with reference to specific preferred embodiments, it should be understood that these embodiments should not be viewed as limitations upon the presents invent and that various changes, substitutions and alterations may be made therein without departing from the spirit and scope of the invention as defined by the appended claims.

## Claims

1. A Media Gateway (MGW) system, comprising a central MGW and one or more than one remote MGW;
the central MGW comprising a central gateway control module, a central internal protocol conversion module, a central media conversion module, a central Time Division Multiplex (TDM) interface module and a central IP interface module; each remote MGW comprising a remote TDM interface module, a remote TDM switching module and a remote internal protocol conversion module, wherein
the central gateway control module, connected with the central TDM interface module, the central media conversion module and the central IP interface module, controls the central TDM interface module, the central media conversion module and the central IP interface module, as well as controls the remote TDM interface module and the remote TDM switching module of the remote MGW;
the central internal protocol conversion module, connected with the central gateway control module and the central TDM interface module, converts the MGW control protocol transmitted to the remote MGW by the central gateway control module into a format recognizable by the central TDM interface module and transmits the converted protocol to the remote MGW through the central TDM interface module and a TDM network;
the central media conversion module, connected with the central TDM interface module and the central IP interface module, implements format conversion of media stream between the TDM interface module and the IP interface module;
the central TDM interface module provides an interface between the central MGW and the external TDM network;
the central IP interface module provides an interface between the central MGW to an external IP network;
the remote TDM interface module provides an interface between the remote MGW and the TDM network;
the remote TDM switching module, connected with the remote TDM interface module, processes the voice circuits and service data between subscribers under the remote MGW received by the remote TDM interface module; and
the remote internal protocol conversion module, connected with the remote TDM interface module, receives, via the remote TDM interface module, the MGW control protocol sent by the central MGW and transmitted via the TDM network, and controls, by the received MGW control protocol, the remote TDM interface module and the remote TDM switching module which are connected with the remote internal protocol conversion module.

2. The media gateway system according to Claim 1, wherein the central MGW further comprises a central maintenance & management module for establishing connections with each module of the central MGW and the remote MGW and conducting maintenance and management.

3. The media gateway system according to Claim 2, wherein the remote MGW further comprises a remote maintenance & management agent module for establishing connections with each module of the remote MGW and conducting maintenance and management.

4. The media gateway system according to Claim 1, wherein the remote MGW further comprises a remote gateway control agent module connected with the remote TDM interface module and the remote TDM switching module to control the remote TDM interface module and the remote TDM switching module as well as connected with the remote internal protocol conversion module to receive the control protocol sent by the central MGW.

5. The media gateway system according to Claim 1, wherein the central TDM interface module or remote TDM interface module comprises a trunk interface or a subscriber interface.

6. The media gateway system according to Claim 5, wherein the subscriber interface further comprises a plain old telephone service (POTS) interface, an integrated services digital network (ISDN) interface or an asymmetrical digital subscriber line (ADSL) interface.

7. The media gateway system according to Claim 1, wherein the control protocol comprises network management protocol, gateway control protocol or signaling.
